# FASCICULE DE BREVET EUROPEEN

(11) **EP 2 173 042 B1**
(45) Date de publication et mention de la délivrance du brevet: **13.04.2011**
(21) Numéro de dépôt: 09172199.3
(22) Date de dépôt: 05.10.2009
(51) Int. Cl.: H04B 10/105

(54) **Ensemble d'emission-reception optique avec contrôle de la direction d'emission**
Optische Sende-Empfangseinheit mit Kontrolle der Senderichtung
Optical transmission-reception unit with controllable transmission direction

(30) Priorité: 06.10.2008 FR 0856748
(43) Date de publication de la demande: 07.04.2010
(73) Titulaire: Astrium SAS, 75016 Paris (FR)
(72) Inventeur: Vaillon, Ludovic, 31400, TOULOUSE (FR); Planche, Gilles, 31280, AIGREFEUILLE (FR)
(74) Mandataire: Cabinet Plasseraud

(56) Documents cités:
- EP-A- 0 607 906
- US-A- 3 942 894
- US-A- 5 517 016

## Description

La présente invention concerne un ensemble d'émission-réception, qui est capable de mesurer et compenser en continu et de manière autonome l'écart angulaire entre la direction d'émission et celle de réception.

Elle s'applique en particulier à un terminal de communication optique par faisceau laser ("free space laser optical communication terminal" en anglais).

La communication optique par faisceau laser est utilisée pour transmettre des données entre deux points qui peuvent être mobiles l'un par rapport à l'autre. Par exemple, elle peut être utilisée pour une communication entre deux satellites artificiels, entre un satellite et un aéronef, un satellite et une base terrestre, etc.

Dans ce mode de transmission, deux terminaux qui sont en liaison de communication réciproque produisent chacun un faisceau laser en direction de l'autre terminal. Chaque terminal est simultanément émetteur et récepteur, de sorte que des données peuvent être transmises dans les deux sens entre les deux terminaux. Les données sont codées de façon appropriée pour être transmises sous la forme d'impulsions des faisceaux laser. Même si l'un des terminaux n'a pas de données à transmettre momentanément, il produit néanmoins un signal de balise qui est utilisé pour le pointage de l'autre terminal.

Un terminal de communication optique comprend donc un système d'émission de signaux laser, qui produit et transmet de tels signaux dans une direction d'émission. Il comprend en outre un système de réception, qui permet de détecter des signaux laser qui proviennent d'une direction déterminée, appelée direction de réception. Des variations de cette direction de réception sont provoquées par le déplacement relatif des deux terminaux pendant la liaison de communication, ainsi que par des changements d'attitude de l'engin à bord duquel le terminal est utilisé. Ces variations sont détectées continûment par des changements du point de focalisation des signaux laser reçus sur une matrice de photodétecteurs qui est comprise dans le système de réception. La direction d'émission du terminal est alors ajustée en fonction des variations de la direction de réception, pour que le faisceau laser des signaux transmis traverse la pupille de réception de l'autre terminal. Un tel fonctionnement du pointage d'un terminal intervient pendant la phase de communication qui correspond à la transmission des données. Cette phase est appelée couramment étape de poursuite. Pendant celle-ci, le pointage de chaque terminal est maintenu en direction de l'autre terminal malgré le déplacement relatif des deux terminaux et leurs mouvements d'attitude respectifs.

Plus précisément, la direction d'émission est calculée à partir de la direction de réception en additionnant à celle-ci un écart d'alignement et un angle de pointage-avant. De façon connue, l'écart d'alignement compense un défaut de parallélisme entre les directions d'émission et de réception. L'angle de pointage-avant correspond au déplacement relatif des deux terminaux pendant la durée de transmission aller-retour des signaux laser. Il est calculé en combinant, dans un référentiel inertiel, la vitesse de propagation des signaux laser avec les vitesses respectives des deux terminaux.

L'écart d'alignement est mesuré après que le terminal a été mis dans ses conditions de fonctionnement, par exemple une fois que le satellite à bord duquel il est installé est sur son orbite définitive. Cette mesure est généralement répétée avant chaque session de communication, afin de s'affranchir des déformations dues aux variations de température du terminal. Un réflecteur escamotable est alors disposé temporairement à la sortie du système d'émission, pour envoyer vers le système de réception une partie du faisceau qui est produit par ce système d'émission. La détection de cette partie du faisceau laser d'émission sur la matrice de photodétecteurs permet de mesurer l'écart d'alignement.

Lorsqu'une même optique d'entrée est utilisée au sein d'un terminal à la fois pour collecter les signaux laser qui sont reçus et pour transmettre les signaux laser qui sont produits par le système d'émission, le réflecteur est un rétroréflecteur qui peut être disposé entre cette optique d'entrée et un système de séparation optique des trajets respectifs des signaux reçus et des signaux transmis. Un tel système de séparation sépare le trajet optique des signaux qui sont reçus, en direction de la matrice de photodétecteurs, par rapport au trajet optique des signaux qui sont transmis, et qui proviennent de la source d'émission interne au terminal. De façon connue, un tel rétroréflecteur peut être formé avantageusement de trois miroirs plans qui sont disposés en coin de cube. En effet, la direction de réflexion d'un tel rétroréflecteur ne varie pas en fonction d'une inclinaison involontaire du rétroréflecteur.

L'écart d'alignement est mesuré lorsque le réflecteur est disposé dans le trajet commun des signaux transmis et reçus, puis le réflecteur est retiré une fois que la mesure est terminée. Une telle mesure de l'écart d'alignement ne peut pas être réalisée pendant une étape de poursuite, car le réflecteur obture au moins partiellement le champ d'entrée optique du terminal. La valeur d'écart d'alignement qui a été mesurée est ensuite utilisée pendant une période fixée de poursuite.

Mais la valeur exacte de l'écart d'alignement peut varier continûment, par exemple sous l'effet de changements de température. Une erreur de pointage résulte alors de l'utilisation d'une même valeur de l'écart d'alignement pendant une période prolongée. Or des mesures de cet écart qui seraient répétées régulièrement réduiraient le temps qui est réellement disponible pour la transmission de données.

Pour utiliser continuellement une valeur exacte de l'écart d'alignement, le document US 5,517,016 propose de réfléchir d'une façon permanente une partie des signaux qui sont transmis par le terminal vers la matrice de photodétecteurs du système de réception. De cette façon, la valeur réelle de l'écart d'alignement peut être mesurée en permanence pendant l'étape de poursuite. Mais la partie des signaux transmis qui est réfléchie est superposée, sur la matrice des photodétecteurs, aux signaux qui proviennent du terminal partenaire dans la liaison de communication. Des erreurs en résultent dans le décodage des données reçues.

Un objectif de la présente invention est donc de permettre une mesure permanente de l'écart d'alignement pendant l'étape de poursuite, sans gêner la détection des signaux qui sont reçus.

Pour cela, l'invention propose un ensemble d'émission-réception optique qui comprend :
- un système d'émission de premiers signaux optiques, qui est adapté pour transmettre ces premiers signaux selon une direction d'émission ;
- un système de réception de seconds signaux optiques, qui comprend lui-même une matrice de photodétectecteurs agencée pour détecter les seconds signaux reçus en un point d'une zone utile de la matrice, chaque point de la zone utile correspondant à une direction de réception des seconds signaux à l'intérieur d'un champ optique d'entrée du système de réception ; et
- un système de couplage optique, qui est agencé pour diriger une partie d'un faisceau des premiers signaux sur la matrice de photodétectecteurs.

L'ensemble d'émission-réception est caractérisé en ce que le système de couplage est agencé en outre pour diriger la partie du faisceau des premiers signaux vers au moins un point de la matrice de photodétecteurs, qui varie en fonction de la direction d'émission et qui est situé en dehors de la zone utile de ladite matrice.

L'ensemble d'émission-réception comprend en outre une unité de contrôle d'émission, qui est adaptée pour déterminer la direction d'émission à partir de coordonnées du point ou des points de la matrice de photodétecteurs où la partie du faisceau des premiers signaux est détectée.

Grâce au fait que la partie du faisceau des premier signaux est dirigée vers la matrice des photodétecteurs en dehors de la zone de celle-ci qui est utilisée pour la détection des signaux reçus, les deux détections, des signaux reçus et de la partie des signaux transmis qui est détournée, peuvent être réalisées simultanément. Autrement dit, les seconds signaux peuvent être détectés à l'intérieur de la zone utile de la matrice de photodétecteurs, en même temps que la partie des premiers signaux qui est dirigée par le système de couplage vers la matrice de photodétecteurs est elle-même détectée en dehors de la zone utile de la matrice. En effet, la partie des signaux transmis qui est détectée n'est pas superposée sur la matrice aux signaux qui sont reçus, et ces derniers peuvent être détectés sans gêne. Ainsi, la direction d'émission, et donc l'écart d'alignement entre la direction d'émission et celle de réception, peut être déterminée tout au long d'une étape de poursuite. La transmission des premiers signaux peut alors être réalisée en compensant exactement, en temps réel, l'écart d'alignement vrai entre les deux directions d'émission et de réception.

En outre, la durée qui est disponible pour la transmission de données pendant l'étape de poursuite n'est pas réduite pour déterminer la direction d'émission.

La zone utile de la matrice de photodétecteurs peut correspondre à un champ optique d'entrée du système de réception pendant un fonctionnement d'acquisition de l'ensemble d'émission-réception.

Selon un premier perfectionnement de l'invention, le système de couplage peut être adapté pour diriger la partie du faisceau des premiers signaux simultanément vers plusieurs points de la matrice de photodétecteurs, ces points variant en fonction de la direction d'émission et étant situés en dehors de la zone utile de la matrice. Dans ce cas, l'unité de contrôle d'émission peut être adaptée pour déterminer la direction d'émission en calculant un barycentre des points de la matrice de photodétecteurs auxquels la partie du faisceau des premiers signaux est détectée. La direction d'émission, ou l'écart d'alignement, peut ainsi être déterminée avec une précision qui est supérieure.

Selon un deuxième perfectionnement de l'invention, le système de couplage peut comprendre un ensemble de plusieurs réflecteurs qui sont solidaires entre eux. Ces réflecteurs sont alors agencés pour réfléchir vers la matrice de photodétecteurs la partie des premiers signaux qui est utilisée pour déterminer la direction d'émission. Une telle réalisation est simple et légère en poids.

En particulier, l'ensemble de réflecteurs peut comprendre trois miroirs plans qui sont disposés pour former un trièdre. Une ouverture interne du trièdre peut alors contenir un coin de cube qui a un sommet commun avec le trièdre. Autrement dit, le trièdre des trois miroirs plans qui sont utilisés pour l'invention est plus ouvert que le coin de cube.

Pour une telle constitution du système de couplage, au moins l'un des trois miroirs peut être tourné d'un angle qui est supérieur à l'angle d'ouverture du champ optique d'entrée du système de réception, par rapport à la face correspondante du coin de cube.

Dans un mode de réalisation préféré de l'invention, l'ensemble de réflecteurs du système de couplage est constitué de trois miroirs plans qui sont disposés en coin, et qui sont chacun inclinés d'un même angle supplémentaire par rapport à une disposition en coin de cube. La partie du faisceau des premiers signaux qui est dirigée vers la matrice de photodétecteurs est alors composée de six faisceaux élémentaires. Ces faisceaux élémentaires peuvent être répartis angulairement de façon symétrique par rapport à un axe optique central de la matrice. Dans ce cas, la déviation angulaire de chacun des faisceaux élémentaires, par rapport à l'axe optique central de la matrice de photodétecteurs, est d'environ 4,6 fois l'angle supplémentaire d'inclinaison de chaque miroir de l'ensemble de réflecteurs.

Selon un troisième perfectionnement de l'invention, le système de couplage peut comprendre en outre un dispositif d'atténuation de la partie du faisceau des premiers signaux qui est dirigée par le système de couplage vers la matrice de photodétecteurs. Un tel dispositif d'atténuation ajuste une puissance de cette partie du faisceau des premiers signaux. Il est ainsi possible d'éviter une saturation des photodétecteurs de la matrice au(x) point(s) de détection de la partie du faisceau des premiers signaux qui est renvoyée par le système de couplage. Le dispositif d'atténuation peut comprendre notamment une lame absorbante.

Selon un quatrième perfectionnement de l'invention, le système de couplage peut comprendre aussi un dispositif de suppression d'un rayonnement parasite qui est produit par l'ensemble de réflecteurs, et qui parviendrait à l'intérieur de la zone utile de la matrice de photodétecteurs. Un tel dispositif de suppression peut comprendre notamment un diaphragme disposé pour bloquer ce rayonnement parasite.

D'autres particularités et avantages de la présente invention apparaîtront dans la description ci-après de plusieurs exemples de réalisation non limitatifs, en référence aux dessins annexés, dans lesquels :
- la figure 1a représente un rétroréflecteur en coin de cube tel que connu de l'art antérieur ;
- la figure 1b représente un exemple de rétroréflecteur pouvant être utilisé pour mettre en oeuvre la présente invention ;
- les figures 2 à 4 illustrent respectivement trois modes de réalisation de terminaux de communication optique selon la présente invention ;
- la figure 5 illustre une utilisation selon l'invention de la surface de détection d'une matrice de photodétecteurs ; et
- les figures 6a et 6b représentent deux autres exemples de rétroréflecteurs pouvant être utilisés pour mettre en oeuvre la présente invention.

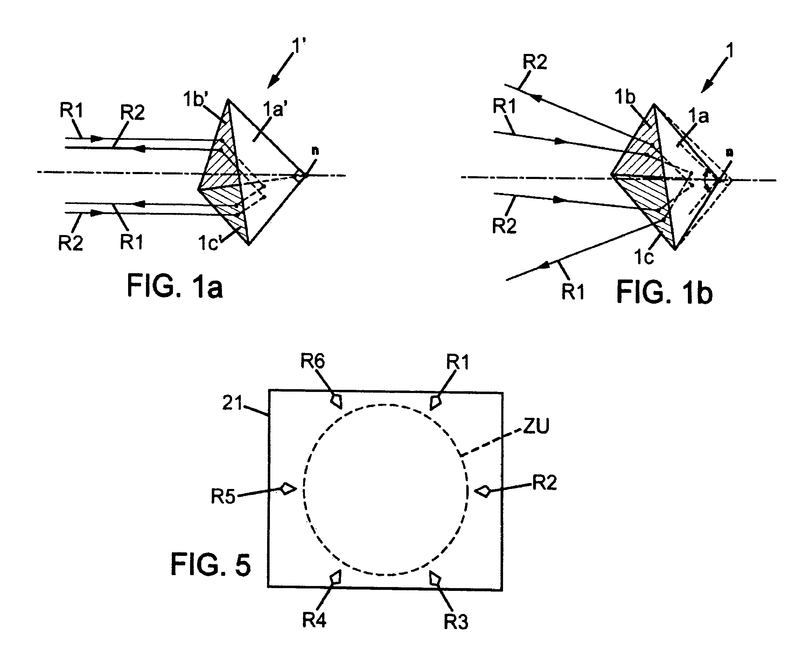

Pour faciliter la compréhension d'un rétroréflecteur qui peut être utilisé dans la présente invention, on décrit d'abord un rétroréflecteur connu de l'art antérieur en référence avec la figure 1a. Ce rétroréflecteur, qui est référencé globalement 1', est constitué de trois miroirs plans 1a', 1b' et 1c'. Chaque miroir a la forme d'un triangle rectangle isocèle. Les miroirs sont disposés de façon à former un coin de cube : ils possèdent deux à deux des bords contigus, et les trois miroirs ont leurs angles droits respectifs qui sont joints pour former le sommet du cube noté Σ. Dans ces conditions, un rayon R1 ou R2 qui entre par l'ouverture du rétroréflecteur 1' est réfléchi successivement par les trois miroirs 1a', 1b' et 1c', et ressort parallèlement à lui-même. La direction d'émergence de chaque rayon est indépendante de l'ordre des réflexions respectives du rayon sur les miroirs 1a', 1b' et 1c'. En pratique, les deux pointes de chacun des miroirs 1a', 1b' et 1c' qui ne sont pas situées au sommet Σ sont coupées, pour éviter que des rayons n'entrent dans le rétroréflecteur mais ne subissent de réflexion que sur un ou deux miroirs seulement, au lieu des trois miroirs. La pupille utile du rétroréflecteur ainsi coupé est un hexagone. Pour raison de clarté, les figures 1a et 1b ne représentent pas de telles coupures des miroirs du rétroréflecteur, qui sont connues de l'Homme du métier.

La figure 1b représente un rétroréflecteur qui peut être utilisé pour réaliser la présente invention. Il est référencé globalement 1 et comprend encore trois miroirs plans isocèles, 1a, 1b et 1c. La structure du rétroréflecteur 1 peut être déduite de celle du rétroréflecteur 1' de la figure 1a en déplaçant le sommet Σ vers l'ouverture du rétroréflecteur. Dans ce cas, les angles au sommet des miroirs 1a, 1b et 1c sont chacun supérieurs à 90 degrés. Ainsi, le trièdre qui est formé par les trois miroirs 1a, 1b et 1c a une ouverture interne qui est supérieure à celle du coin de cube lorsque celui-ci est translaté en suivant le sommet Σ.

Dans ces conditions, un rayon R1 qui entre dans le rétroréflecteur 1 en ressort selon une direction écartée par rapport à sa direction d'incidence. En outre, l'orientation de la direction d'émergence par rapport à la direction d'incidence dépend de l'ordre dans lequel les trois miroirs 1a, 1b et 1c réfléchissement successivement le rayon. On comparera pour cela les tracés des deux rayons R1 et R2 sur la figure 1b. Un même faisceau incident qui est réfléchi par le rétroréflecteur 1 est ainsi divisé en plusieurs faisceaux réfléchis qui sont séparés angulairement en fonction des inclinaisons des trois miroirs 1a, 1b et 1c. Les faisceaux réfléchis sont distingués par l'ordre des réflexions sur les trois miroirs 1a, 1b et 1c. La configuration du rétroréflecteur 1 de la figure 1b produit ainsi six faisceaux réfléchis à partir d'un même faisceau incident.

Les trois miroirs 1a, 1b et 1c du rétroréflecteur 1 de la figure 1b sont tournés symétriquement, chacun par rapport au miroir correspondant 1a', 1b' et 1c'. Dans ce cas, les six faisceaux réfléchis sont répartis symétriquement sur un cône qui est centré sur la direction du faisceau incident, et dont le demi-angle au sommet est déterminé par le biais angulaire des miroirs du rétroréflecteur par rapport au coin de cube. Ce demi-angle au sommet est sensiblement égal à 4,6 fois le biais commun des trois miroirs.

Néanmoins, il suffit pour l'invention que l'un au moins des miroirs 1a, 1b et 1c soit tourné par rapport à la face correspondante du coin de cube qui est contenu dans l'ouverture du rétroréflecteur 1.

Comme il sera décrit plus loin, la valeur du biais angulaire du ou des miroir(s) du rétroréflecteur qui est (sont) tourné(s) pour mettre en oeuvre l'invention, par rapport à la face correspondante du coin de cube, est choisie de sorte que la partie du faisceau d'émission qui est réfléchie par le rétroréflecteur le soit avec une déviation supérieure à un demi-angle d'ouverture du champ optique d'entrée du système de réception.

A titre d'illustration, l'invention est maintenant décrite dans le cadre de la communication par faisceau laser. L'ensemble d'émission-réception auquel est appliquée l'invention est donc un terminal de communication optique par faisceau laser.

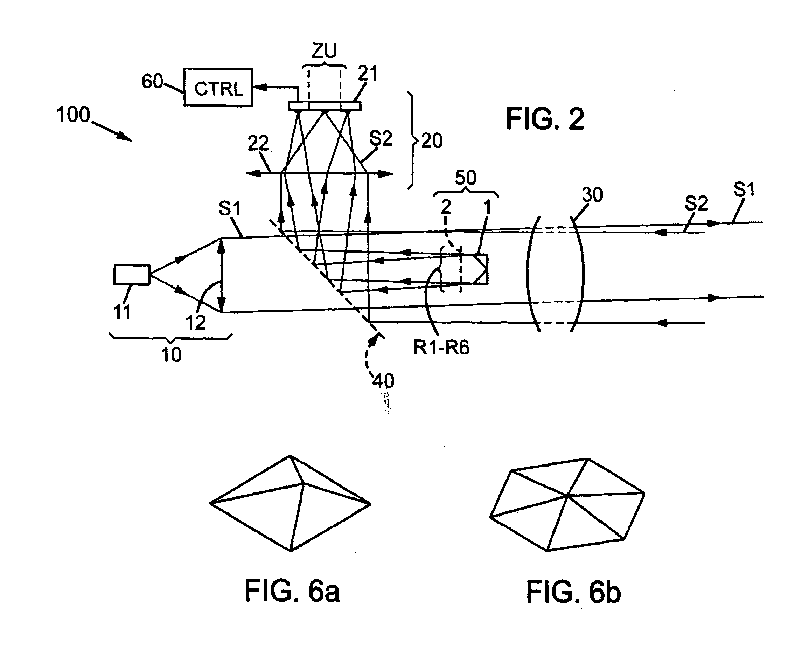

Les figures 2 à 5 illustrent trois terminaux de communication optique par faisceau laser qui sont conformes à la présente invention. Sur ces figures, des références identiques désignent des éléments qui sont identiques, ou qui ont des fonctions identiques. Ces figures sont des schémas illustratifs des principes optiques qui sont mis en oeuvre, et permettent à l'Homme du métier de reproduire chaque de mode réalisation. Dans la suite, les éléments du fonctionnement d'un terminal de communication optique par signaux laser qui sont bien connus et ne sont pas modifiés par l'invention, ne sont pas repris.

Chaque terminal comprend un système d'émission de signaux laser 10, et un système de réception de signaux laser 20. Typiquement, le système d'émission 10 comprend une source de signaux laser 11 et une optique de collimation 12. Le système de réception 20 comprend une matrice de photodétecteurs 21 et optique de focalisation 22. La matrice 21 est placée dans le plan de formation d'image de l'optique 22. La référence 100 désigne le terminal dans son ensemble.

Le faisceau laser des signaux qui sont produits par la source 11 est noté S1. La source 11 et l'optique 12 sont agencées de préférence de sorte que le faisceau S1 ait une structure parallèle après l'optique 12. Le faisceau laser des signaux qui sont reçus par le terminal, en provenance d'un autre terminal de communication optique externe au terminal 100, est noté S2. Dans la suite, pour raison de simplicité, S1 et S2 pourront aussi désigner les signaux qui sont transmis et reçus par le terminal, respectivement, aussi appelés premiers signaux et seconds signaux dans la première partie de la description de l'invention.

Pour les trois modes de réalisation, mais d'une façon qui n'est pas indispensable par rapport à l'invention, les terminaux décrits ont chacun une entrée optique qui est commune au système d'émission et au système de réception. Cette entrée optique, qui peut être un objectif de télescope, est référencée globalement 30 sans que le détail de sa structure soit représenté. Chaque terminal comprend alors en outre un système de séparation optique 40 qui est situé entre l'entrée optique 30 et la source d'émission 11 d'une part, et entre l'entrée optique 30 et la matrice de photodétecteurs 21 d'autre part. Le système de séparation 40, qui peut être une lame semi-réfléchissante, est adapté pour transmettre les signaux S1 qui sont produits par la source 11 vers l'entrée optique 30, et les signaux reçus S2 qui traversent l'entrée optique 30 vers la matrice de photodétecteurs 21. En fait, l'entrée optique 30 appartient fonctionnellement à la fois au système d'émission 10 et au système de réception 20. Pour une telle structure de terminal de communication optique à entrée optique commune aux deux voies d'émission et de réception, le système de couplage qui est introduit selon l'invention forme un rétroréflecteur pour la partie du faisceau des signaux transmis S1 qui est dirigée vers la matrice de photodétecteurs.

Conformément à la figure 2, le terminal 100 comprend un rétroréflecteur 1 qui est situé entre l'entrée optique 30 et le système de séparation optique 40, sur un segment de trajet qui est commun aux signaux transmis S1 et aux signaux reçus S2. Le rétroréflecteur 1 peut être du type représenté sur la figure 1b. De préférence, il possède une section transversale qui est réduite, pour éviter d'occulter le faisceau S1 des signaux transmis dans une proportion significative.

Le rétroréflecteur 1 sélectionne ainsi une partie du faisceau des signaux transmis S1, qu'il réfléchit sous la forme de six faisceaux secondaires qui sont référencés respectivement R1 à R6. Les faisceaux R1 - R6 sont réfléchis vers la lame semi-réfléchissante 40 puis vers la matrice de photodétecteurs 21 à travers l'optique de focalisation 22. Chacun d'eux forme alors une tache lumineuse sur la matrice 21, dont la position dépend de la direction d'émission du système 10.

En outre, les directions respectives faisceaux réfléchis R1 - R6 sont écartées angulairement les unes des autres, de la façon qui a été expliquée plus haut en référence à la figure 1b. Grâce à cet écartement, les taches qui sont formées sur la matrice 21 par les faisceaux R1 - R6 sont situées en dehors d'une zone centrale de la matrice qui est dédiée à la détection des signaux reçus S2, comme représenté sur la figure 5. La zone centrale de la matrice 21 qui est dédiée à la détection des signaux S2 est notée ZU et appelée zone utile. Chaque point de la zone utile ZU correspond à une direction de réception distincte pour les signaux S2, à l'intérieur du champ d'entrée du système de réception 20. La zone utile ZU peut être la zone de la matrice 21 qui est utilisée pendant une étape de poursuite, ou de préférence pendant une étape d'acquisition. Dans le premier cas, son diamètre angulaire apparent peut être de quelques dizaines de microradians, et dans le second cas de quelques milliradians. L'écartement des taches correspondant aux faisceaux R1 - R6 à l'extérieur de la zone utile ZU est fixé par les inclinaisons des miroirs 1a - 1c du rétroréflecteur 1. Par exemple, un biais angulaire qui est supérieur à 0,5 mrad (milliradian) environ et qui est appliqué identiquement aux trois miroirs 1a, 1b et 1c permet de placer les taches des faisceaux R1 - R6 à l'extérieur d'une zone utile ZU qui correspond à un demi-angle d'ouverture de 2,5 mrad du champ d'entrée du système de réception 20.

Chaque tache de faisceau R1 - R6 peut correspondre à un seul photodétecteur de la matrice 21, ou plusieurs photodétecteurs en fonction du degré de collimation du faisceau S1. Un point central est déterminé pour chaque tache, puis un barycentre des points centraux respectifs des taches est calculé. Les coordonnées de ce barycentre caractérisent alors la direction d'émission du système 10. L'écart entre la direction d'émission qui est ainsi déterminée et la direction de réception des signaux S2, qui est caractérisée par le point d'impact de ceux-ci à l'intérieur de la zone utile ZU, est l'écart d'alignement.

Pour cela, les signaux de détection des faisceaux R1 - R6 qui sont produits par la matrice de photodétecteurs 21 peuvent être transmis à un contrôleur d'émission 60, noté CTRL. Le contrôleur 60 détermine la direction d'émission en calculant le barycentre des points de détection des faisceaux R1 - R6. Le système d'émission 10 peut en outre contenir un déflecteur variable (non représenté), qui est agencé pour modifier la direction réelle d'émission. Le contrôleur 60 peut alors commander ce déflecteur variable pour compenser l'écart d'alignement qui a été déterminé. Ainsi, l'écart d'alignement entre les directions respectives d'émission du système 10 et de réception du système 20 peut être déterminé et compensé en temps réel, en même temps que les signaux S2 sont détectés dans la zone utile ZU de la matrice 21.

Avantageusement, une lame absorbante 2 peut être disposée en outre devant l'ouverture du rétroréflecteur 1, afin de réduire l'intensité des taches des faisceaux R1 - R6 sur la matrice 21. La lame 2 permet d'ajuster l'intensité des faisceaux R1 - R6 sur la matrice 21 dans l'intervalle de détection des photodétecteurs.

Le rétroréflecteur 1 et la lame 2 forment ensemble le système de couplage 50 qui a été introduit dans la description générale de l'invention. La lame 2 possède donc une fonction d'atténuation des faisceaux réfléchis par le système de couplage 50.

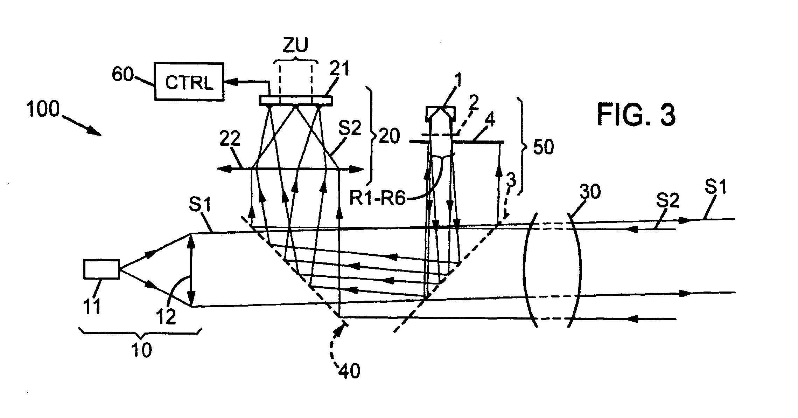

Le deuxième mode de réalisation de l'invention qui est illustré par la figure 3 peut être construit à partir du premier mode de réalisation de la figure 2 en déportant le rétroréflecteur 1 en dehors du segment de trajet qui est commun aux signaux S1 et S2. L'avantage de ce second mode de réalisation est que la partie du faisceau S1 qui est rétroréfléchie n'est plus déterminée uniquement par le rapport entre la section du rétroréflecteur 1 et la taille du faisceau d'émission S1. Dans ce cas, le système de couplage 50 comprend en outre un dispositif réfléchissant 3 qui est placé entre l'entrée optique 30 et le système de séparation optique 40, sur le segment commun des trajets des signaux S1 et S2. Le dispositif 3 est agencé pour diriger la partie du faisceau des signaux S1 vers le rétroréflecteur 1. Par exemple, le dispositif 3 peut comprendre une lame semi-réfléchissante. Dans ce cas, celle-ci s'étend avantageusement à travers toute la section du faisceau S1, pour éviter que ses bords ne génèrent de la lumière parasite qui pourrait parvenir dans la zone utile ZU de la matrice 21. Alternativement, la lame 3 peut s'étendre sur une partie seulement de la section transversale du faisceau des signaux S1.

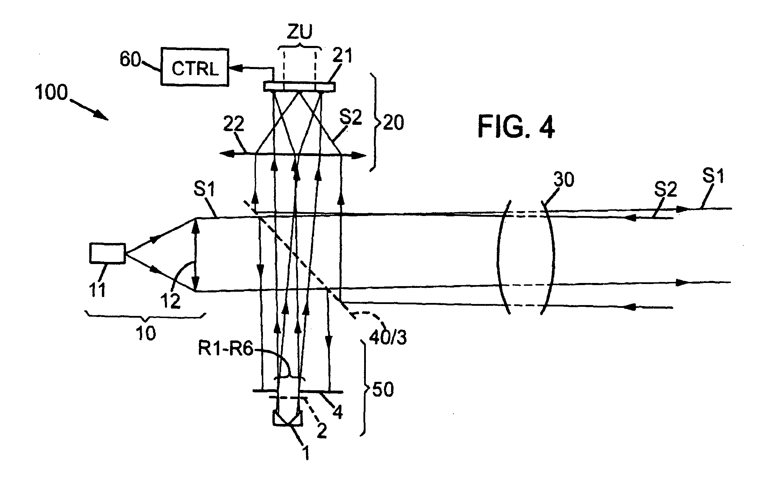

Enfin, le troisième mode de réalisation de l'invention qui est illustré par la figure 4 peut être construit à partir du deuxième mode de réalisation de la figure 3 en combinant les fonctions des lames semi-réfléchissantes 40 et 3. Autrement dit, le système de séparation des signaux S1 et S2 est adapté en outre pour transmettre vers l'ensemble de réflecteurs la partie du faisceau des signaux S1 qui est utilisée pour déterminer la direction d'émission. L'Homme du métier comprendra le fonctionnement de ce troisième mode de réalisation à la lumière des explications qui ont été données précédemment pour les premier et deuxième modes, et de la figure 4.

Selon un perfectionnement des modes de réalisation des figures 3 et 4, le système de couplage 50 peut comprendre en outre un diaphragme 4 qui est placé devant l'ensemble de réflecteurs. Un tel diaphragme occulte un rayonnement parasite qui peut être produit par l'ensemble de réflecteurs et qui parviendrait à l'intérieur de la zone utile ZU de la matrice de photodétecteurs 21. Un tel rayonnement parasite peut être produit, notamment, par des bords diffusants des miroirs 1a, 1b et 1c. Pour la même raison, un masque des bords des miroirs 1a, 1b et 1c peut être ajouté au mode de réalisation de l'invention de la figure 2. Un tel diaphragme ou masque possède donc une fonction de suppression du rayonnement parasite produit par l'ensemble de réflecteurs.

D'une façon générale, il est avantageux que le système de couplage 50 ne détourne qu'une partie réduite du faisceau des signaux S1 vers le système de réception 20, afin de ne pas réduire sensiblement la puissance des signaux S1 qui sont transmis réellement vers l'extérieur du terminal 100. Ainsi, le système de couplage 50 peut être adapté avantageusement pour que la partie du faisceau des signaux S1 qui est dirigée par lui vers la matrice de photodétecteurs 21 représente une proportion d'une puissance des signaux S1 produits par le système d'émission 10 qui est inférieure à 3%, de préférence inférieure à 1 %.

Lorsque que système de couplage comprend un ensemble de réflecteurs, tels que les miroirs 1a, 1b et 1c, et est implanté dans le trajet qui est commun aux signaux S1 et S2 comme représenté à la figure 2, le système de couplage doit posséder une section transversale qui est bien plus petite que la taille des faisceaux S1 et S2. La section transversale du rétroréflecteur 1 est alors de préférence inférieure à 20 mm², voire inférieure à 7 mm², correspondant respectivement à un diamètre du rétroréflecteur 1 qui est inférieur à 5 ou 3 mm environ. Cette contrainte disparaît lorsque le rétroréflecteur 1 est déporté en dehors du trajet qui est commun aux signaux S1 et S2, comme dans les modes de réalisation de l'invention qui sont illustrés par les figures 3 et 4. La partie du faisceau S1 qui est rétroréfléchie peut alors être ajustée au moyen des caractéristiques de la lame semi-réfléchissante 3.

Il est entendu que l'invention peut être reproduite en modifiant les modes de réalisation qui ont été décrits en détail ci-dessus, tout en conservant certains au moins des avantages qui ont été cités. Parmi ces avantages, il est rappelé que l'invention permet de déterminer en permanence la valeur réelle de l'écart d'alignement entre les directions d'émission et de réception du terminal. Cet écart peut alors être compensé avec exactitude d'une façon continue.

Parmi les modifications qui peuvent être introduites, la structure du dispositif de couplage peut être changée. Les figures 6a et 6b représentent deux ensembles de réflecteurs qui sont constitués de plusieurs miroirs plans disposés en pyramide. En particulier, le nombre de côtés de la pyramide peut être varié : quatre pour la figure 6a et six pour la figure 6b. Toutefois, la structure de l'ensemble de réflecteurs en trièdre de la figure 1b est préférée, car elle engendre une sensibilité du fonctionnement de l'invention qui est réduite, par rapport à une inclinaison globale de l'ensemble de réflecteurs.

Lorsque l'ensemble de réflecteurs est conçu à partir d'un coin de cube, un seul ou deux seulement des miroirs peuvent être tournés par rapport aux faces du cube. Par ailleurs, un rétroréflecteur qui produit plusieurs faisceaux réfléchis à partir d'un même faisceau incident peut aussi être obtenu en combinant un rétroréflecteur usuel en coin de cube conforme à la figure 1a avec des prismes déflecteurs.

En outre, le système de couplage peut être disposé devant ou derrière un objectif d'entrée du terminal 100, sur le trajet commun des signaux transmis S1 et reçus S2.

Enfin, bien que l'invention ait été décrite en détail dans le cadre de la communication par faisceau laser, elle peut être appliquée de façon similaire à toute autre ensemble d'émission-réception optique. L'Homme du métier saura alors adapter certaines caractéristiques particulières, telles que des dimensions du système de couplage optique, à la longueur d'onde et à la densité d'énergie du rayonnement qui est reçu dans le mode d'émission-réception utilisé.

## Revendications

1. Ensemble d'émission-réception optique comprenant :
- un système (10) d'émission de premiers signaux optiques, adapté pour transmettre lesdits premiers signaux selon une direction d'émission ;
- un système (20) de réception de seconds signaux optiques, comprenant lui-même une matrice de photodétectecteurs (21) agencée pour détecter lesdits seconds signaux reçus en un point d'une zone utile (ZU) de ladite matrice, chaque point de ladite zone utile correspondant à une direction de réception des seconds signaux à l'intérieur d'un champ optique d'entrée du système de réception ; et
- un système (50) de couplage optique, agencé pour diriger une partie d'un faisceau des premiers signaux sur la matrice de photodétectecteurs, ledit ensemble d'émission-réception comprenant en outre une unité de contrôle d'émission (60) adaptée pour déterminer la direction d'émission à partir de coordonnées du point ou des points de la matrice de photodétecteurs au(x)quel(s) ladite partie du faisceau des premiers signaux est détectée et étant
**caractérisé en ce que** le système de couplage (50) est agencé en outre pour diriger ladite partie du faisceau des premiers signaux vers au moins un point de la matrice de photodétecteurs (21), ledit au moins un point variant en fonction de la direction d'émission et étant situé en dehors de la zone utile (ZU) de ladite matrice,

2. Ensemble d'émission-réception selon la revendication 1, formant un terminal de communication optique par faisceau laser (100).

3. Ensemble d'émission-réception selon la revendication 1 ou 2, adapté pour détecter les seconds signaux à l'intérieur de la zone utile (ZU) de la matrice de photodétecteurs, en même temps que la partie des premiers signaux dirigée par le système de couplage (50) vers ladite matrice de photodétecteurs (21) est détectée en dehors de ladite zone utile de la matrice.

4. Ensemble d'émission-réception selon l'une quelconque des revendications 1 à 3, dans lequel le système de couplage (50) est adapté pour diriger la partie du faisceau des premiers signaux simultanément vers plusieurs points de la matrice de photodétecteurs (21), lesdits points variant en fonction de la direction d'émission et étant situés en dehors de la zone utile (ZU) de ladite matrice,
l'unité de contrôle d'émission (60) étant adaptée pour déterminer la direction d'émission en calculant un barycentre des points de la matrice de photodétecteurs auxquels ladite partie du faisceau des premiers signaux est détectée.

5. Ensemble d'émission-réception selon la revendication 4, dans lequel le système de couplage (50) comprend un ensemble (1) de plusieurs réflecteurs solidaires.

6. Ensemble d'émission-réception selon la revendication 5, dans lequel le système de couplage (50) comprend en outre un dispositif d'atténuation agencé pour ajuster une puissance de la partie du faisceau des premiers signaux dirigée sur la matrice des photodétecteurs (21) par ledit système de couplage.

7. Ensemble d'émission-réception selon la revendication 6, dans lequel le dispositif d'atténuation comprend une lame absorbante (2).

8. Ensemble d'émission-réception selon l'une quelconque des revendications 5 à 7, dans lequel le système de couplage (50) comprend en outre un dispositif de suppression d'un rayonnement parasite produit par l'ensemble de réflecteurs (1) et qui parviendrait à l'intérieur de la zone utile (ZU) de la matrice de photodétecteurs (21).

9. Ensemble d'émission-réception selon la revendication 8, dans lequel le dispositif de suppression comprend un diaphragme (4).

10. Ensemble d'émission-réception selon l'une quelconque des revendications 5 à 9, dans lequel l'ensemble de réflecteurs (1) comprend trois miroirs plans (1a, 1b, 1c) disposés pour former un trièdre ayant une ouverture interne qui contient un coin de cube ayant un sommet commun avec ledit trièdre.

11. Ensemble d'émission-réception selon la revendication 10, dans lequel au moins un des trois miroirs plans (1a, 1b, 1c) de l'ensemble de réflecteurs est tourné, par rapport à une face correspondante du coin de cube, d'un angle adapté de sorte que la partie de faisceau des premiers signaux soit réfléchie avec une déviation supérieure à un demi-angle d'ouverture du champ optique d'entrée du système de réception (20).

12. Ensemble d'émission-réception selon la revendication 11, dans lequel les trois miroirs plans (1a, 1b, 1c) de l'ensemble de réflecteurs sont tournés chacun, par rapport à la face correspondante du coin de cube, d'un angle supérieur ou égal à 0,5 milliradians.

13. Ensemble d'émission-réception selon l'une quelconque des revendications précédentes, ayant une entrée optique (30) commune au système d'émission (10) et au système de réception (20), l'ensemble d'émission-réception comprenant en outre un système de séparation optique (40) situé entre ladite entrée optique et une source d'émission (11) des premiers signaux d'une part, et entre ladite entrée optique et la matrice de photodétecteurs (21) d'autre part, ledit système de séparation étant adapté pour transmettre les premiers signaux produits par la source d'émission vers l'entrée optique et les seconds signaux traversant l'entrée optique vers la matrice de photodétecteurs,
le système de couplage (50) formant rétroréflecteur pour la partie du faisceau des premiers signaux qui est dirigée vers la matrice de photodétecteurs (21).

14. Ensemble d'émission-réception selon la revendication 13 avec la revendication 5, dans lequel l'ensemble de réflecteurs (1) est situé entre l'entrée optique (30) de l'ensemble d'émission-réception et le système de séparation optique (40), sur un segment de trajet commun aux premiers et seconds signaux.

15. Ensemble d'émission-réception selon la revendication 14, dans lequel l'ensemble de réflecteurs (1) possède une section transversale inférieure à 20 mm², de préférence inférieure à 7 mm².

16. Ensemble d'émission-réception selon la revendication 13 avec la revendication 5, dans lequel le système de couplage (50) comprend un dispositif réfléchissant (3) placé entre l'entrée optique (30) de l'ensemble d'émission-réception et le système de séparation optique (40), sur un segment de trajet commun aux premiers et seconds signaux, et l'ensemble de réflecteurs (1) est situé en dehors dudit segment de trajet commun, le dispositif réfléchissant étant agencé pour diriger la partie du faisceau des premiers signaux vers l'ensemble de réflecteurs.

17. Ensemble d'émission-réception selon la revendication 16, dans lequel le dispositif réfléchissant (3) comprend une lame semi-réfléchissante.

18. Ensemble d'émission-réception selon la revendication 13 avec la revendication 5, dans lequel le système de séparation (40) est adapté en outre pour transmettre la partie du faisceau des premiers signaux vers l'ensemble de réflecteurs (1).

19. Ensemble d'émission-réception selon l'une quelconque des revendications précédentes, dans lequel la zone utile (ZU) de la matrice de photodétecteurs correspond à un champ optique d'entrée du système de réception (20) pendant un fonctionnement d'acquisition dudit ensemble d'émission-réception.

20. Ensemble d'émission-réception selon l'une quelconque des revendications précédentes, dans lequel le système de couplage (50) est adapté de sorte que la partie du faisceau des premiers signaux, qui est dirigée vers la matrice de photodétecteurs (21) par ledit système de couplage, représente une proportion d'une énergie desdits premiers signaux produits par le système d'émission (10) inférieure à 3%, de préférence inférieure à 1%.

## Claims

1. Optical transceiver assembly comprising:
- a system (10) for transmitting first optical signals, suitable for transmitting said first signals in a transmission direction;
- a system (20) for receiving second optical signals, itself comprising a matrix of photodetectors (21) arranged to detect said second signals received at a point in an effective zone (ZU) of said matrix, each point of said effective zone corresponding to a reception direction of the second signals inside an entrance optical field of the reception system; and
- an optical coupling system (50), arranged for directing a part of a beam of the first signals onto the photodetector matrix,
said transceiver assembly also comprising a transmission control unit (60) suitable for determining the direction of transmission based on coordinates of the point or points of the photodetector matrix at which said part of the beam of the first signals is detected and being
**characterized in that** the coupling system (50) is also arranged for directing said part of the beam of the first signals toward at least one point of the photodetector matrix (21), said at least one point varying depending on the direction of transmission and being located outside the effective zone (ZU) of said matrix.

2. Transceiver assembly according to Claim 1, forming a free space laser optical communication terminal (100).

3. Transceiver assembly according to Claim 1 or 2, suitable for detecting the second signals inside the effective zone (ZU) of the photodetector matrix, at the same time as the part of the first signals directed by the coupling system (50) to said photodetector matrix (21) is detected outside said effective zone of the matrix.

4. Transceiver assembly according to any one of Claims 1 to 3, in which the coupling system (50) is suitable for directing the part of the beam of the first signals simultaneously to several points of the photodetector matrix (21), said points varying according to the direction of transmission and being located outside the effective zone (ZU) of said matrix,
the transmission control unit (60) being suitable for determining the direction of transmission by computing a barycenter of the points of the photodetector matrix at which said part of the beam of the first signals is detected.

5. Transceiver assembly according to Claim 4, in which the coupling system (50) comprises an assembly (1) of several joined reflectors.

6. Transceiver assembly according to Claim 5, in which the coupling system (50) also comprises an attenuation device arranged to adjust a power of the part of the beam of the first signals directed to the photodetector matrix (21) by said coupling system.

7. Transceiver assembly according to Claim 6, in which the attenuation device comprises an absorbing plate (2).

8. Transceiver assembly according to any one of Claims 5 to 7, in which the coupling system (50) also comprises a device for suppressing interfering radiation produced by the reflector assembly (1) and which might reach the inside of the effective zone (ZU) of the photodetector matrix (21).

9. Transceiver assembly according to Claim 8, in which the suppression device comprises a diaphragm (4).

10. Transceiver assembly according to any one of Claims 5 to 9, in which the reflector assembly (1) comprises three planar mirrors (1a, 1b, 1c) arranged to form a trihedron having an internal aperture which contains a cube corner having an apex common with said trihedron.

11. Transceiver assembly according to Claim 10, in which at least one of the three planar mirrors (1a, 1b, 1c) of the reflector assembly is tilted, relative to
a corresponding face of the cube corner, at an angle such that the part of the beam of the first signals is reflected with a deviation greater than a half aperture angle of the entrance optical field of the reception system (20).

12. Transceiver assembly according to Claim 11, in which the three planar mirrors (1a, 1b, 1c) of the reflector assembly are each tilted, relative to the corresponding face of the cube corner, with an angle greater than or equal to 0.5 milliradians.

13. Transceiver assembly according to any one of the preceding claims, having an optical entrance (30) that is common with the transmission system (10) and the reception system (20), the transceiver assembly also comprising an optical separating system (40) situated between said optical entrance and a transmission source (11) of the first signals on the one hand, and between said optical input and the photodetector matrix (21) on the other hand, said separating system being suitable for transmitting the first signals produced by the transmission source to the optical entrance and the second signals passing through the optical entrance to the photodetector matrix,
the coupling system (50) forming a retroreflector for the part of the beam of the first signals that is directed to the photodetector matrix (21).

14. Transceiver assembly according to Claim 13 with Claim 5, in which the reflector assembly (1) is situated between the optical entrance (30) of the transceiver assembly and the optical separating system (40), in a path segment common to the first and second signals.

15. Transceiver assembly according to Claim 14, in which the reflector assembly (1) has a cross section smaller than 20 mm², preferably smaller than 7 mm².

16. Transceiver assembly according to Claim 13 with Claim 5, in which the coupling system (50) comprises a reflecting device (3) placed between the optical entrance (30) of the transceiver assembly and the optical separating system (40), in a path segment common to the first and second signals, and the reflector assembly (1) is situated outside said common path segment, the reflecting device being arranged to direct the part of the beam of the first signals to the reflector assembly.

17. Transceiver assembly according to Claim 16, in which the reflecting device (3) comprises a semi-reflecting plate.

18. Transceiver assembly according to Claim 13 with Claim 5, in which the separating system (40) is also suitable for transmitting the part of the beam of the first signals to the reflector assembly (1).

19. Transceiver assembly according to any one of the preceding claims, in which the effective zone (ZU) of the photodetector matrix corresponds to an entrance optical field of the reception system (20) during an acquisition operation of said transceiver assembly.

20. Transceiver assembly according to any one of the preceding claims, in which the coupling system (50) is adapted so that the part of the beam of the first signals, which is directed to the photodetector matrix (21) by said coupling system, represents a proportion of an energy of said first signals produced by the transmission system (10) that is less than 3%, preferably less than 1 %.

## Patentansprüche

1. Optische Sende-Empfangsanordnung, umfassend
- ein System (10) zum Senden erster optischer Signale, das dazu angepasst ist, die ersten Signale entlang einer Senderichtung zu übertragen;
- ein System (20) zum Empfang zweiter optischer Signale, welches selbst eine Photodetektor-Matrix (21) umfasst, die dazu angeordnet ist, die zweiten Signale zu detektieren, welche an einem Punkt eines Nutzbereichs (ZU) der Matrix empfangen werden, wobei jeder Punkt des Nutzbereichs einer Empfangsrichtung der zweiten Signale innerhalb eines optischen Eintrittsfelds des Empfangssystems entspricht; und
- ein optisches Kopplungssystem (50), das dazu angeordnet ist, einen Teil eines Strahls der ersten Signale auf die Photodetektor-Matrix zu lenken,
wobei die Sende-Empfangsanordnung ferner eine Sende- Regelungs-/Steuerungseinheit (60) umfasst, die dazu angepasst ist, die Senderichtung von Koordinaten des Punktes oder der Punkte der Photodetektor-Matrix ausgehend zu bestimmen, an dem bzw. an denen der Teil des Strahls der ersten Signale detektiert wird, und
**dadurch gekennzeichnet, dass** das Kopplungssystem (50) ferner dazu angeordnet ist, den Teil des Strahls der ersten Signale zu wenigstens einem Punkt der Photodetektor-Matrix (21) hin zu lenken, wobei der wenigstens eine Punkt in Abhängigkeit von der Senderichtung variiert und sich außerhalb des Nutzbereichs (ZU) der Matrix befindet.

2. Sende-Empfangsanordnung nach Anspruch 1, die ein Terminal zur optischen Kommunikation durch Laserstrahlen (100) bildet.

3. Sende-Empfangsanordnung nach Anspruch 1 oder 2, die dazu angepasst ist, die zweiten Signale innerhalb des Nutzbereichs (ZU) der Photodetektor-Matrix zu detektieren, wobei gleichzeitig der Teil der ersten Signale, welcher durch das Kopplungssystem (50) zu der Photodetektor-Matrix (21) hin gelenkt wird, außerhalb des Nutzbereichs der Matrix detektiert wird.

4. Sende-Empfangsanordnung nach einem der Ansprüche 1 bis 3, wobei das Kopplungssystem (50) dazu angepasst ist, den Teil des Strahls der ersten Signale gleichzeitig zu mehreren Punkten der Photodetektor-Matrix (21) hin zu lenken, wobei die Punkte in Abhängigkeit von der Senderichtung variieren und sich außerhalb des Nutzbereichs (ZU) der Matrix befinden, wobei die Sende-Regelungs-/Steuerungseinheit (60) dazu angepasst ist, die Senderichtung durch Berechnen eines Schwerpunkts der Punkte der Photodetektor-Matrix zu bestimmen, an welchen der Teil des Strahls der ersten Signale detektiert wird.

5. Sende-Empfangsanordnung nach Anspruch 4, wobei das Kopplungssystem (50) eine Anordnung (1) aus mehreren verbundenen Reflektoren umfasst.

6. Sende-Empfangsanordnung nach Anspruch 5, wobei das Kopplungssystem (50) ferner eine Abschwächungsvorrichtung umfasst, die dazu angeordnet ist, eine Leistung des Teils des Strahls der ersten Signale, welcher durch das Kopplungssystem auf die Photodetektor-Matrix (21) gelenkt wird, einzustellen.

7. Sende-Empfangsanordnung nach Anspruch 6, wobei die Abschwächungsvorrichtung eine Absorptionsplatte (2) umfasst.

8. Sende-Empfangsanordnung nach einem der Ansprüche 5 bis 7, wobei das Kopplungssystem (50) ferner eine Vorrichtung zur Unterdrückung von Störstrahlung umfasst, die durch die Reflektoranordnung (1) erzeugt wird und das Innere des Nutzbereichs (ZU) der Photodetektor-Matrix (21) erreichen würde.

9. Sende-Empfangsanordnung nach Anspruch 8, wobei die Unterdrückungsvorrichtung ein Diaphragma (4) umfasst.

10. Sende-Empfangsanordnung nach einem der Ansprüche 5 bis 9, wobei die Reflektoranordnung (1) drei Planspiegel (1a, 1b, 1c) umfasst, die dazu angeordnet sind, einen Dreiflächner zu bilden, welcher eine Innenöffnung aufweist, die einen Würfeleckbereich enthält, der einen mit dem Dreiflächner gemeinsamen Eckpunkt aufweist.

11. Sende-Empfangsanordnung nach Anspruch 10, wobei wenigstens einer der drei Planspiegel (1a, 1b, 1c) der Reflektoranordnung in Bezug auf eine entsprechende Seite des Würfeleckbereichs um einen Winkel gedreht ist, der so angepasst ist, dass der Teil des Strahls der ersten Signale mit einer Abweichung größer als ein halber Öffnungswinkel des optischen Eintrittsfelds des Empfangssystems (20) reflektiert wird.

12. Sende-Empfangsanordnung nach Anspruch 11, wobei jeder der Planspiegel (1a, 1b, 1c) der Reflektoranordnung in Bezug auf die entsprechende Seite des Würfeleckbereichs um einen Winkel von wenigstens 0,5 Milliradiant gedreht ist.

13. Sende-Empfangsanordnung nach einem der vorhergehenden Ansprüche, umfassend einen optischen Eingang (30), welcher dem Sendesystem (10) und dem Empfangssystem (20) gemeinsam ist, wobei die Sende-Empfangsanordnung ferner ein optisches Separationssystem (40) umfasst, welches sich zwischen dem optischen Eingang und einer Sendequelle (11) der ersten Signale einerseits und zwischen dem optischen Eingang und der Photodetektor-Matrix (21) andererseits befindet, wobei das Separationssystem dazu angepasst ist, die ersten Signale, die von der Sendequelle erzeugt werden, zu dem optischen Eingang hin zu übertragen und die zweiten Signale, die den optischen Eingang durchqueren, zu der Photodetektor-Matrix zu übertragen, wobei das Kopplungssystem (50) einen Rückreflektor für den Teil des Strahls der ersten Signale bildet, der zu der Photodetektor-Matrix (21) hin gelenkt wird.

14. Sende-Empfangsanordnung nach Anspruch 13 in Verbindung mit Anspruch 5, wobei die Reflektoranordnung (1) sich zwischen dem optischen Eingang (30) der Sende-Empfangsanordnung und dem optischen Separationssystem (40) auf einem den ersten und den zweiten Signalen gemeinsamen Wegabschnitt befindet.

15. Sende-Empfangsanordnung nach Anspruch 14, wobei die Reflektoranordnung (1) einen Querschnitt von weniger als 20 mm² aufweist, vorzugsweise von weniger als 7 mm².

16. Sende-Empfangsanordnung nach Anspruch 13 in Verbindung mit Anspruch 5, wobei das Kopplungssystem (50) eine Reflektionsvorrichtung (3) umfasst, die zwischen dem optischen Eingang (30) der Sende-Empfangsanordnung und dem optischen Separationssystem (40) auf einem den ersten und den zweiten Signalen gemeinsamen Wegabschnitt platziert ist, und wobei die Reflektoranordnung (1) sich außerhalb des gemeinsamen Wegabschnitts befindet, wobei die Reflektionsvorrichtung dazu angeordnet ist, den Teil des Strahls der ersten Signale zu der Reflektoranordnung hin zu reflektieren.

17. Sende-Empfangsanordnung nach Anspruch 16, wobei die Reflektionsvorrichtung (3) eine halbreflektierende Platte umfasst.

18. Sende-Empfangsanordnung nach Anspruch 13 in Verbindung mit Anspruch 5, wobei das Separationssystem (40) ferner dazu angepasst ist, den Teil des Strahls der ersten Signale zu der Reflektoranordnung (1) hin zu übertragen.

19. Sende-Empfangsanordnung nach einem der vorhergehenden Ansprüche, wobei der Nutzbereich (ZU) der Photodetektor-Matrix während eines Erfassungsbetriebs der Sende-Empfangsanordnung einem optischen Eintrittsfeld des Empfangssystems (20) entspricht.

20. Sende-Empfangsanordnung nach einem der vorhergehenden Ansprüche, wobei das Kopplungssystem (50) so angepasst ist, dass der Teil des Strahls der ersten Signale, der durch das Kopplungssystem zu der Photodetektor-Matrix (21) hin gelenkt wird, einen Anteil einer Energie der ersten Signale, welche von dem Sendesystem (10) erzeugt werden, von kleiner als 3%, vorzugsweise kleiner als 1 %, darstellt.
